# FASCICULE DE BREVET EUROPEEN

(11) **EP 0 557 405 B1**
(45) Date de publication et mention de la délivrance du brevet: **15.06.1994**
(21) Numéro de dépôt: 91920911.4
(22) Date de dépôt: 13.11.1991
(51) Int. Cl.: G06K 17/00, G06K 19/08

(54) **MACHINE DE PERSONNALISATION POUR CARTES A PUCES**
VORRICHTUNG ZUR PERSONIFIZIERUNG VON CHIPKARTEN
SMART CARD PERSONALIZATION MACHINE

(30) Priorité: 16.11.1990 FR 9014329
(43) Date de publication de la demande: 01.09.1993
(73) Titulaire: GEMPLUS, 13420 Gemenos (FR)
(72) Inventeur: BERTHOZAT, Michel, F-75116 Paris (FR); MORGAVI, Paul, F-75116 Paris (FR)
(74) Mandataire: Schmit, Christian Norbert Marie
(86) Numéro de dépôt international: FR9100892
(87) Numéro de publication internationale: WO9209052

(56) Documents cités:
- EP-A- 0 027 886
- EP-A- 0 085 177
- EP-A- 0 266 926
- FR-A- 2 005 398

## Description

De plus en plus on cherche à personnaliser les cartes à puces non seulement en inscrivant dans une mémoire non-volatile de la puce des informations spécifiques de l'utilisateur, mais aussi en imprimant sur la partie extérieure visible de la carte des indications ou dessins spécifiques de l'utilisateur.

A titre d'exemple, on peut envisager que la carte contienne des données d'identification d'une personne, alors que la surface extérieure de la carte comporte le nom et l'adresse de la personne, sa photo, le logo de son entreprise, etc.

Les cartes à puces de la technologie actuelle ont une épaisseur qui ne peut pas descendre au dessous d'environ 1 à 2 millimètres environ, puisqu'il faut prévoir l'épaisseur de la puce de circuit intégré, de son enrobage, du connecteur électrique qui permettra la liaison de la puce avec un lecteur de cartes, etc.

On s'est aperçu que cette épaisseur non négligeable pose des problèmes avec les technologies d'impression couramment utilisées.

D'autre part, on s'est aperçu qu'il est extrêmement souhaitable de faire la personnalisation électrique de la puce en même temps que la personnalisation graphique de la surface extérieure de la carte, c'est-à-dire qu'il est souhaitable d'avoir une machine unique pour faire en même temps les deux types de personnalisation. Cela évite des risques de mélange d'informations tels que l'attribution de données de personnalisation électrique n'ayant rien à voir avec les données graphiques imprimées sur la carte.

Dans la technique actuelle, il existe des machines automatiques qui se composent de deux parties : une tête électrique permettant d'inscrire les données électriques (personnalisation électrique), et une tête d'impression graphique par transfert thermique à partir d'un ruban, pour la personnalisation graphique de l'extérieur de la carte. Une telle machine est par exemple décrite dans le document EP-A-0 266 926, mais dans ce cas la personnalisation graphique est faite par embossage, le document EP-A-0 027 886 décrivant une machine de personnalisation graphique pure par impression.

Dans ces machines, les têtes d'impression comportent, sur une surface plane, une ligne de points d'impression thermique (points chauffants élémentaires). Ces points chauffants peuvent venir s'appliquer contre la surface de la carte, avec interposition d'un ruban encreur entre les points chauffants et la carte. Selon les points qui sont effectivement chauffés au moment de l'impression, une ligne de points d'encrage est transférée thermiquement du ruban vers la carte. On peut ainsi imprimer ligne par ligne un motif personnalisé (dessins ou caractères d'écriture) sur la carte.

Mais la surface de contact de la tête d'impression thermique risque de ne pas s'appliquer correctement contre la surface de la carte si celle-ci présente des défauts de planéité. C'est pourquoi on est obligé, dans les machines actuelles, de prévoir de courber la carte à l'endroit d'impression, la courbure étant dans un sens tel que la ligne de points de la tête d'impression soit alignée le long d'une génératrice du cylindre formé par la carte courbée, et la convexité de la courbure étant tournée du côté de la tête d'impression. Cela permet d'appliquer correctement la ligne de points de la tête le long de cette génératrice, pour imprimer une ligne de points désirés; après cela on passe à une ligne d'impression suivante, en déplaçant la carte courbée par rapport à la tête de telle manière que la tête d'impression soit toujours sur une génératrice du cylindre formé par la carte courbée.

Pour les cartes à puces, l'épaisseur des cartes est suffisamment élevée pour qu'on ait des difficultés à réaliser cette courbure sans établir des contraintes trop importantes dans le corps de la carte. Ces contraintes peuvent affecter non seulement la matière plastique de la carte, mais aussi la fonctionnalité électrique de la carte, ne serait ce que par un risque de rupture de connexions internes entre la puce et le connecteur qui sert à la mettre en contact avec un lecteur de cartes.

La mécanique nécessaire à l'obtention d'une courbure de la carte est complexe, donc chère.

Par ailleurs, cette mécanique de courbure est peu compatible avec l'établissement de connexions électriques avec la puce en vue de la personnalisation électrique de la carte. Or on souhaite effectuer la personnalisation électrique simultanément avec l'impression graphique, ou immédiatement avant ou après, notamment avant d'insérer une nouvelle carte en regard de la tête d'impression.

La mécanique de courbure a d'autres inconvénients comme par exemple le fait qu'elle empêche pratiquement de prévoir une structure dans laquelle la carte entre et sort par le même orifice de la machine. Il faut prévoir un orifice d'entrée et un orifice de sortie. Et cela suppose alors qu'on prévoie un système de tête de lecture électrique spécial (tête de lecture capable de s'abaisser pour effectuer la personnalisation puis de se lever pour laisser passer la carte vers la sortie).

Enfin, on a constaté que les machines existantes étaient relativement peu faciles à commander pour fournir des bons résultats d'impression dans certains cas, et notamment lorsque les cartes insérées sont déjà imprimées (offset ou sérigraphie), ce qui peut se produire même avant personnalisation.

Pour éviter les inconvénients de la technique antérieure, la présente invention propose une machine automatique de personnalisation graphique et électrique de cartes à puces ou de cartes magnétiques dont les particularités principales sont les suivantes :
- la tête d'impression est montée sur des moyens (chariot mobile) qui permettent de la lever ou l'abaisser perpendiculairement à la surface de la carte,
- l'appareil est pourvu de moyens pour déplacer la carte à plat ligne par ligne sous la tête d'impression et pour l'amener dans un lecteur de cartes pourvu de moyens pour effectuer la personnalisation électrique.

On peut notamment utiliser un lecteur de cartes à puces classique, standard, avec insertion sans frottement.

La tête verticale est de préférence montée à pivotement de manière que la tranche qui porte les éléments chauffants puisse s'appliquer correctement sur toute sa longueur contre la carte.

La tranche du support mince qui porte les éléments chauffants comporte de préférence des bords arrondis.

De préférence il n'y a qu'une ligne d'éléments chauffants sur la tranche.

La machine est de préférence agencée pour que les cartes entrent et sortent par une même fente d'introduction.

On peut effectuer l'impression personnalisée avant la personnalisation électrique ou après, mais de préférence les deux opérations sont effectuées successivement sans que la carte ressorte de la machine. On peut également envisager que les deux opérations soient faites simultanément, mais cela suppose alors que la tête d'impression graphique se déplace ligne par ligne par rapport à la carte pendant que celle-ci est insérée dans le lecteur et subit la personnalisation électrique.

D'autres caractéristiques et avantages de l'invention apparaîtront à la lecture de la description détaillée qui suit et qui est faite en référence aux dessins annexés dans lesquels :
- la figure 1 représente schématiquement une machine de personnalisation de la technique antérieure;
- la figure 2 représente une tête d'impression graphique de la technique antérieure en vue de côté;
- la figure 3 représente une vue de dessous de la tête de la figure 2 ;
- la figure 4 représente une vue de côté d'une tête d'impression utilisée dans l'invention;
- la figure 5 représente une vue de dessous de la tête de la figure 4;
- la figure 6 représente une vue schématique de la machine selon l'invention;
- la figure 7 représente une vue de face de la tête, montée à pivotement sur un bras susceptible de se déplacer transversalement au plan de la carte.

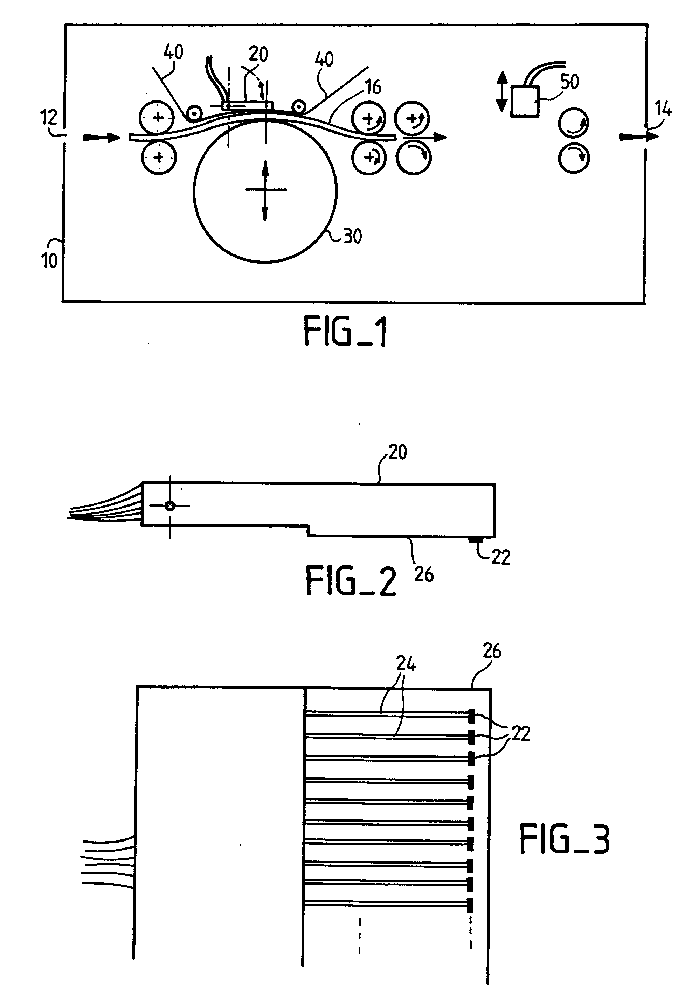

Comme on le voit sur la figure 1, les machines de personnalisation graphique et électrique de la technique antérieure nécessitent une mécanique complexe pour courber la carte à puce pendant l'opération d'impression.

Les cartes sont introduites par une fente d'introduction 12 de la machine 10 et elles peuvent ressortir après personnalisation par une fente 14. Pratiquement il serait difficile de prévoir que les cartes rentrent et sortent par la même fente.

La carte 16 est entraînée par des galets vers une position où elle peut être imprimée par une tête d'impression thermique 20. Dans cette position, la carte est courbée par un rouleau presseur 30. La tête d'impression est placée en regard d'une partie du rouleau contre laquelle s'applique la carte. Par exemple, le rouleau est en position basse lors de l'introduction de la carte et se lève en courbant la carte lorsque celle-ci est en place.

La tête d'impression 20 est montée à pivotement et vient s'appliquer contre la face convexe de la carte, avec interposition d'un ruban encreur 40 entre la tête et la carte, chaque fois qu'une ligne de points doit être imprimée. La tête est commandée électroniquement pour sélectionner, à chaque ligne, les points qui doivent être imprimés et ceux qui ne doivent pas l'être, selon un principe d'impression classique par points en ligne.

A chaque nouvelle ligne à imprimer, la carte avance d'un pas sous la tête d'impression.

Lorsque l'impression est finie, la carte est déplacée vers une autre position, toujours à l'intérieur de la machine, où la personnalisation électrique est effectuée. Pour cette personnalisation, une tête d'écriture électrique 50 peut venir en contact avec le connecteur électrique (non visible sur les figures) prévu sur la carte et relié à la puce contenue dans la carte. Cette tête 50 doit pouvoir se lever pour laisser passer la carte de sa position d'impression vers sa position de personnalisation électrique, puis de cette position vers la sortie. Elle doit se baisser seulement pendant la phase de personnalisation électrique.

La tête d'impression graphique 20 utilisée dans ces machines est représentée schématiquement à la figure 2 en vue de côté et à la figure 3 en vue de dessous. C'est une tête de transfert thermique comportant une série d'éléments chauffants placés en ligne. Sur la figure 2 on ne voit que l'extrémité de cette ligne, donc un seul élément chauffant 22 placé en bout de ligne. Sur la figure 3 on voit les éléments chauffants alignés 22 avec leurs connexions électriques 24. Eléments chauffants et connexions électriques sont par exemple sérigraphiés sur la surface plane inférieure d'un support 26 (par exemple en céramique).

Lorsque la tête d'impression fonctionne, toute la surface plane sur laquelle sont déposés les éléments chauffants s'applique contre la carte (le ruban encreur étant interposé entre la tête et la carte); la carte étant courbée, si on s'arrange pour que la ligne d'éléments chauffants s'applique contre une génératrice du cylindre formé par la carte (de préférence à l'endroit de courbure maximale), les éléments chauffants seront parfaitement appliqués et l'impression sera correcte. Le support 26 ne vient en effet en contact avec la carte que sur cette génératrice et non sur toute sa surface inférieure.

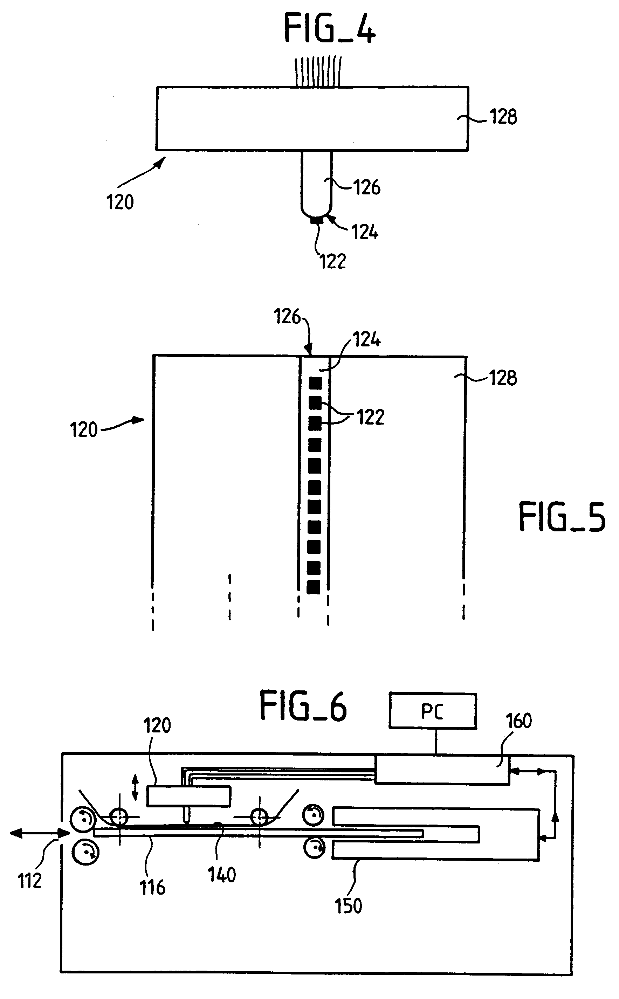

La figure 4 représente une tête d'impression telle qu'on propose de l'utiliser dans la présente invention, en vue de côté; la figure 5 représente cette tête en vue dessous.

Cette tête 120 est dite "tête d'impression verticale" du fait de sa structure; elle comporte un support principal 128 d'où s'étend vers le bas (en supposant que la carte à imprimer est placée au dessous de la tête) un support secondaire plan 126 allongé et de faible épaisseur. Le support secondaire fait saillie sur toute sa longueur par rapport au support principal.

A l'extrémité inférieure du support principal, sur sa tranche allongée 124, sont disposés les éléments chauffants 122. Ils sont en ligne.

La tranche 124 est de préférence arrondie pour faciliter le contact des éléments chauffants avec la carte à travers le ruban encreur. L'arrondi est une forme cylindrique (semi circulaire ou non) dont les génératrices sont parallèles à la direction d'allongement de la tranche (c'est-à-dire la direction d'alignement des éléments chauffants).

Avec une telle tête, il n'est plus nécessaire de courber la carte, ce qui évite les contraintes sur celles-ci et ce qui rend possible beaucoup plus facilement :
- le passage de la carte d'une position d'impression à une position de personnalisation électrique,
- l'utilisation d'un lecteur de cartes classique (et non d'une tête de lecture mobile) pour faire la personnalisation électrique,

La machine de personnalisation de cartes qui en résulte est représentée schématiquement et à titre d'exemple à la figure 6.

Elle comporte une fente d'introduction 112 unique pour l'insertion et le retrait d'une carte 116, et des moyens (rouleaux d'entraînement par exemple) pour déplacer la carte à plat, vers sa position d'impression (sous la tête 120) puis vers sa position de personnalisation électrique (ces deux positions peuvent être confondues si on prévoit des moyens pour déplacer la tête d'impression relativement à la carte pendant la personnalisation électrique).

Un lecteur de cartes classique 150 reçoit la carte dans sa position de personnalisation électrique. C'est un lecteur classique dont le connecteur est à insertion sans frottement : l'arrivée de la carte en bout de course fait basculer des contacts qui viennent s'appliquer sur les contacts extérieurs correspondants de la carte. Le lecteur avec son connecteur répond de préférence aux normes internationales ISO 7816-3 et permet de personnaliser aussi bien des cartes à microprocesseur à fonctionnement asynchrone que des cartes synchrones.

Une électronique de commande 160 contrôle le lecteur de cartes et la tête d'impression thermique 120. Cette électronique de commande peut elle-même être pilotée par un microordinateur personnel PC. Le pilotage de la machine lecteur de cartes et tête d'impression (commandes mécaniques, personnalisation graphique et personnalisation électrique) se fait par l'intermédiaire de sous programmes afin de faciliter l'intégration de cette machine dans un système de personnalisation.

La tête d'impression thermique est disposée au dessus de la carte 116 dans sa position d'impression, et un ruban encreur 140 est placé entre la tête et la carte, avec un système de galets de maintien et d'entraînement pour appliquer le ruban au bon endroit et pour faire défiler le ruban au fur et à mesure de son utilisation. La ligne d'éléments chauffants 122 de la tête 120 est dirigée parallèlement au plan de la carte et perpendiculairement au sens d'avance de celle-ci (tout au moins dans le cas où la tête d'impression est globalement fixe au dessus du trajet de la carte, car alors la carte se déplace pas à pas pour une impression ligne par ligne). Des moyens d'avance pas à pas de la carte sont prévus pour effectuer l'impression ligne par ligne. Si la longueur de la tête d'impression ne recouvre pas toute la largeur à imprimer sur la carte au cours de son défilement, on comprendra qu'il faut effectuer plusieurs passages successifs en décalant latéralement la tête pour la placer sur une nouvelle surface de carte à imprimer.

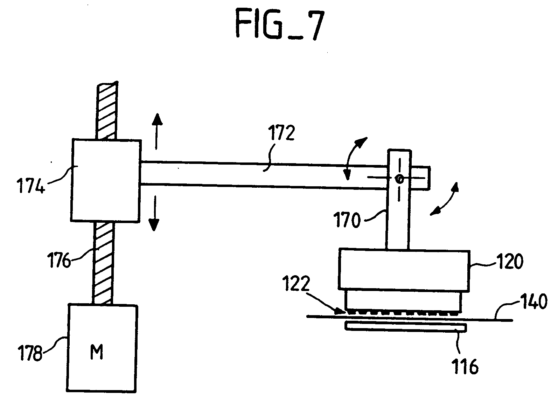

A la figure 7 on a représenté un exemple de montage de la tête d'impression thermique de la machine de personnalisation selon l'invention. La tête est montée à l'extrémité d'un bras 170 monté à pivotement sur un autre bras 172, l'axe de pivotement étant parallèle à la surface de la carte et perpendiculaire à la ligne d'éléments chauffants, pour que cette ligne puisse venir s'appliquer correctement sur la carte même si le plan de celle-ci n'est pas parfaitement perpendiculaire à la direction dans laquelle s'abaisse et s'élève la tête d'impression à chaque pas d'impression.

Le bras 172 est lui-même monté fixement sur un chariot 174 mobile en translation perpendiculairement à la surface de la carte. Ce chariot est par exemple monté sur une vis sans fin 176 entraînée en rotation par un moteur 178. La tête s'abaisse et se relève à chaque fois qu'on veut faire avancer la carte sans risquer de frotter la tête sur la carte.

La tête d'impression sera pilotée par le microordinateur PC de la figure 6, avec un logiciel permettant notamment de prendre en compte les types de rubans, types de matériaux de carte, et bien entendu les informations graphiques et électriques de personnalisation pour chaque carte individuelle. Les logiciels comportent notamment des programmes d'impression de caractères ou d'images stockées.

On a ainsi décrit une machine de personnalisation combinée électrique et graphique qui est beaucoup plus efficace, moins chère et plus avantageuse sur de nombreux points que les machines de l'art antérieur (notamment : vitesse de fonctionnement améliorée en chargement et déchargement, absence de problème de positionnement de la carte au dessous d'une tête de lecture, pas de contrainte sur la carte, etc.).

## Revendications

1. Machine automatique de personnalisation graphique et électrique d'une carte à puce (116) ou d'une carte à puce et magnétique, qui comporte une tête d'impression graphique (120) dite verticale, du type comportant des éléments chauffants (122) situés sur la tranche d'un support (126) de faible épaisseur, caractérisée en ce que
- la tête d'impression graphique est montée sur des moyens (170, 172, 174) qui permettent de la lever ou l'abaisser perpendiculairement à la surface de la carte, et que cette machine comporte additionnellement:
- un lecteur de cartes (150) pourvu de moyens pour effectuer la personnalisation électrique,
- des moyens pour déplacer relativement la carte à plat, ligne par ligne, sous la tête d'impression (120) par rapport à la tête d'impression dans sa position d'impression, puis par rapport au lecteur, et
- une fente d'introduction (112) unique pour l'insertion et le retrait d'une carte (116),
- le lecteur étant un lecteur dont le connecteur est à insertion sans frottement : l'arrivée de la carte en bout de course faisant basculer des contacts qui viennent s'appliquer sur les contacts extérieurs correspondants de la carte.

2. Machine selon la revendication 1, caractérisée en ce que la tête verticale est montée à pivotement de manière que la tranche qui porte les éléments chauffants puisse s'appliquer correctement sur toute sa longueur contre la carte.

3. Machine selon l'une des revendications précédentes, caractérisée en ce que la tranche du support mince (126) qui porte les éléments chauffants comporte des bords arrondis.

4. Machine selon l'une des revendications précédentes, caractérisée en ce qu'il n'y a qu'une ligne d'éléments chauffants sur la tranche.

## Patentansprüche

1. Automatische Maschine zur graphischen und elektrischen Personifizierung einer Chipkarte (116) oder einer Magnet- und Chipkarte, mit
- einem sogenannten vertikalen, graphischen Druckkopf (120) des Typs, der Heizelemente (122) aufweist, die sich an der Schnittfläche eines Trägers (126) mit geringer Dicke befinden, dadurch gekennzeichnet, daß
- der graphische Druckkopf an Mitteln (170, 172, 174) angebracht ist, die es ermöglichen, ihn senkrecht zur Oberfläche der Karte anzuheben oder abzusenken, und daß diese Maschine außerdem enthält:
- eine Karten-Leseeinrichtung (150), die mit Mitteln versehen ist, um die elektrische Personifizierung auszuführen,
- Mittel zum zeilenweisen Verschieben der liegenden Karte unter dem Druckkopf (120) relativ zu dem in seiner Druckposition befindlichen Druckkopf und dann relativ zur Leseeinrichtung, und
- einen einzigen Einführungsschlitz (112) zum Einschieben und Herausziehen einer Karte (116),
- wobei die Leseeinrichtung eine Leseeinrichtung ist, deren Verbindungseinrichtung mit reibungsfreiem Einschub arbeitet: wenn die Karte das Ende des Einschubweges erreicht, veranlaßt sie ein Kippen der Kontakte, die mit den entsprechenden äußeren Kontakten der Karte in Eingriff gelangen.

2. Maschine gemäß Anspruch 1, dadurch gekennzeichnet, daß der vertikale Kopf schwenkbar angebracht ist, so daß die Schnittfläche, die die Heizelemente trägt, über ihre gesamte Länge richtig gegen die Karte gedrückt werden kann.

3. Maschine gemäß einem der vorangehenden Ansprüche, dadurch gekennzeichnet, daß die Schnittfläche des dünnen Trägers (126), die die Heizelemente trägt, abgerundete Kanten aufweist.

4. Maschine gemäß einem der vorangehenden Ansprüche, dadurch gekennzeichnet, daß auf der Schnittfläche nur eine Reihe von Heizelementen vorhanden ist.

## Claims

1. Automatic machine for graphic and electrical personalization of a chip card (116) or magnetic chip card, comprising:
- a graphic printing head (120), termed vertical, of the type comprising heating elements (122) situated on the section of a support (126) of limited thickness, characterized in that:
- the graphic printing head is mounted on means (170, 172, 174) which make it possible to raise or lower it perpendicularly to the surface of the card,
and that this machine comprises in addition:
- a card reader (150) provided with means for effecting the electrical personalization;
- means for displacing the card flat, line by line, underneath the printing head (120), in relation to the printing head in its printing position, and then in relation to the reader, and
- one single insertion slit (112) for the insertion and withdrawal of a card (116)
- the reader being a reader of which the connector is of the frictionless insertion type, the arrival of the card at the end of its travel causing contacts to tilt and come to rest against the corresponding external contacts of the card.

2. Machine in accordance with claim 2, characterized in that the vertical head is pivotably mounted in such a way that the section bearing the heating elements can come to rest correctly over the whole of its length against the card.

3. Machine in accordance with either of the preceding claims, characterized in that the section of the thin support (126) which bears the heating elements has rounded edges.

4. Machine in accordance with any one of the preceding claims, characterized in that there is only one row of heating elements on the section.
